# EUROPÄISCHE PATENTSCHRIFT

(11) **EP 1 487 712 B1**
(45) Veröffentlichungstag und Bekanntmachung des Hinweises auf die Patenterteilung: **25.10.2006**
(21) Anmeldenummer: 03700004.9
(22) Anmeldetag: 08.01.2003
(51) Int. Cl.: B65D 47/08, B29C 45/26

(54) **GESCHLOSSEN HERSTELLBARER KUNSTSTOFFVERSCHLUSS, SOWIE SPRITZGUSSFORM UND VERFAHREN ZU DESSEN HERSTELLUNG**
PLASTIC CLOSURE WHICH CAN BE PRODUCED IN A CLOSED MANNER, INJECTION MOULD AND METHOD FOR THE PRODUCTION THEREOF
BOUCHON EN PLASTIQUE POUVANT ETRE FABRIQUE A L'ETAT FERME, AINSI QUE MOULE DE MOULAGE PAR INJECTION ET PROCEDE DE FABRICATION DUDIT MOULE

(30) Priorität: 11.01.2002 CH 43022002
(43) Veröffentlichungstag der Anmeldung: 22.12.2004
(73) Patentinhaber: Bericap Holding GmbH, 55257 Budenheim (DE)
(72) Erfinder: DUBACH, Werner, Fritz, CH-8124 Maur (CH)
(74) Vertreter: Lieke, Winfried
(86) Internationale Anmeldenummer: PCT/CH2003/000004
(87) Internationale Veröffentlichungsnummer: WO 2003/057585

(56) Entgegenhaltungen:
- EP-A- 0 852 205
- US-A- 4 541 795
- US-A- 4 919 286
- US-A- 5 114 655
- US-A- 5 605 240
- US-B1- 6 318 605

## Beschreibung

Die vorliegende Erfindung betrifft einen Kunststoffverschluss, umfassend einen Unterteil und einen Deckel und ein Schnappscharnier, über _das die beiden Verschlussteile einstückig miteinander verbunden sind, wobei Unterteil und Deckel geschlossen und über mindestens eine Solltrennnaht miteinander zusätzlich verbunden herstellbar sind. Die Erfindung betrifft ferner eine Spritzgussform zur Herstellung solcher Kunststoffverschlüsse sowie zusätzlich ein Verfahren mit dem die vorgenannten Verschlüsse unter Verwendung der erfindungsgemässen Spritzgussformen herstellbar sind.

Verschlüsse der eingangs genannten Art sind beispielsweise aus der CH-A-673'631 bekannt. Es handelt sich hierbei um einen Kunststoffverschluss, dessen Unterteil auf einen Flaschenhals oder einen auf dem Flaschenhals befestigten Adapter aufsetzbar ist. Die Schnappwirkung des Verschlusses wird mit einem Federelement erzeugt, welches eine Biegefeder ist, die von der Behälterwandung von aussen her in den Innenraum des Verschlusses hineinragt. Die Schnappwirkung wird folglich nicht durch die Verformung der Behälterwände erzielt sondern einzig durch die Rückstellkraft des U-förmigen Federelementes.

Zur Herstellung des bekannten Kunststoffverschlusses sind zwingend Durchbrüche in den Verschlusswänden des Kunststoffverschlusses erforderlich. Zum einen muss ein Durchbruch in der äusseren, umlaufenden Mantelwand vorhanden sein, um die U-förmige Feder auf der Innenseite zu formen und andererseits eine Ausnehmung in der Deckfläche, um die obere, äussere Fläche der U-förmigen Feder durch die Spritzform mit den Aufnahmekavitäten zu erzielen.

Die Herstellung eines solchen Verschlusses bedingt folglich zwingend relativ grosse Seitenzüge oder Schieber, was einerseits die Spritzgussformen erheblich verteuert und andererseits die Taktzeiten verlängert. Entsprechend sind Kunststoffverschlüsse dieser bekannten Art relativ teuer und haben sich auf dem Markt bisher nicht durchgesetzt.

Letztlich ist aber auch die mangelnde gestalterische Freiheit ein Problem, das kaum lösbar ist. Die Herstellbarkeit verlangt nämlich zwingend eine konische oder stufenförmige Gestaltung des Kunststoffverschlusses, wobei die Mantelwände des Deckels gegenüber dem Unterteil mindestens um die Wandstärke zueinander versetzt angeordnet sein müssen.

Das gleiche Konzept wie in der CH-A-673'631 ist auch in der CH-683'611 realisiert worden. Auch hier wird der geschlossen gespritzte Kunststoffverschluss dadurch realisiert, dass Unterteil und Kappe konisch übereinander angeordnet sind. Im Gegensatz zur erstgenannten Ausführung wird hier jedoch ein Schnappscharnier realisiert, welches nicht mit einem als Biegefeder gestalteten Federelement realisiert ist, sondern mittels zweier flacher Zwischenelemente, über die Zugkräfte übertragen werden, wobei jedoch die Federkraft sich einzig aus der Deformierung der angrenzenden Behälterwände realisiert. Zwingend ist hierbei, dass die Behälterwände von Unterteil und Kappe mindestens im Scharnierbereich zur Zentrumsachse hin geneigt verlaufend sind. Zwar kann ein solcher Verschluss ohne Schieber hergestellt werden, doch lässt er sich auf herkömmlichen Flaschenhälse nicht ohne einen Adapter verwenden. Die zwingende Konizität ergibt eine Durchmesserdifferenz zwischen Unterteil und Dichtzapfen im Deckel, der grösser ist als übliche Flaschenhälse.

Es ist daher die Aufgabe der vorliegenden Erfindung, einen Kunststoffverschluss der eingangs genannten Art zu schaffen, der besonders einfache Spritzformen benötigt, entsprechend mit kurzen Taktzeiten herstellbar ist und eine zylindrische Gestaltung der Aussenkontur erlaubt.

Diese Aufgabe löst ein Kunststoffverschluss der eingangs genannten Art mit den kennzeichnenden Merkmalen des Patentanspruches 1.

Es ist ferner die Aufgabe der vorliegenden Erfindung, eine Spritzgussform zur Herstellung von Kunststoffverschlüssen der obgenannten Art herzustellen, die in der Herstellung äusserst preiswert ist und mit hohen Taktzeiten arbeiten kann.

Diese Aufgabe erfüllt eine Spritzgussform mit den Merkmalen des Patentanspruches 16.

Letztlich betrifft die Erfindung auch ein Verfahren zur Herstellung der Verschlüsse der eingangs genannten Art unter Verwendung der vorgenannten Spritzgussform, welches Verfahren die Merkmale des Patentanspruches 19 aufweist. Aus den abhängigen Ansprüchen gehen Weiterbildungsformen der jeweiligen Erfindung hervor und deren Bedeutung ist in der nachfolgenden Beschreibung erläutert.

In der beiliegenden Zeichnung ist ein bevorzugtes Ausführungsbeispiel des erfindungsgemässen Kunststoffverschlusses dargestellt, während sowohl auf die Darstellung der Spritzgussform als auch auf eine schematische Darstellung des Verfahrens verzichtet wird, da der Fachmann auf Grund der nachfolgenden Erläuterungen einer entsprechenden Darstellung nicht bedarf.

Das einzige bevorzugte Ausführungsbeispiel des erfindungsgemässen Kunststoffverschlusses ist in der Zeichnung dargestellt. Es zeigt:
- Figur 1: zeigt eine Seitenansicht des erfindungsgemässen geschlossen hergestellten Kunststoffverschlusses auf einen teilweise dargestellten Behälterhals aufgesetzt und
- Figur 2: dieselbe Ansicht nach Entfernung des Garantiebandes und
- Figur 3: wiederum denselben Kunststoffverschluss, diesmal in einem diametralen Vertikalschnitt in geöffnetem Zustand und letztlich
- Figur 4: einen Vertikalschnitt durch den Kunststoffverschluss nach Figur 1 vor der erstmaligen Öffnung, wiederum auf einen Behälterhals aufgesetzt dargestellt.

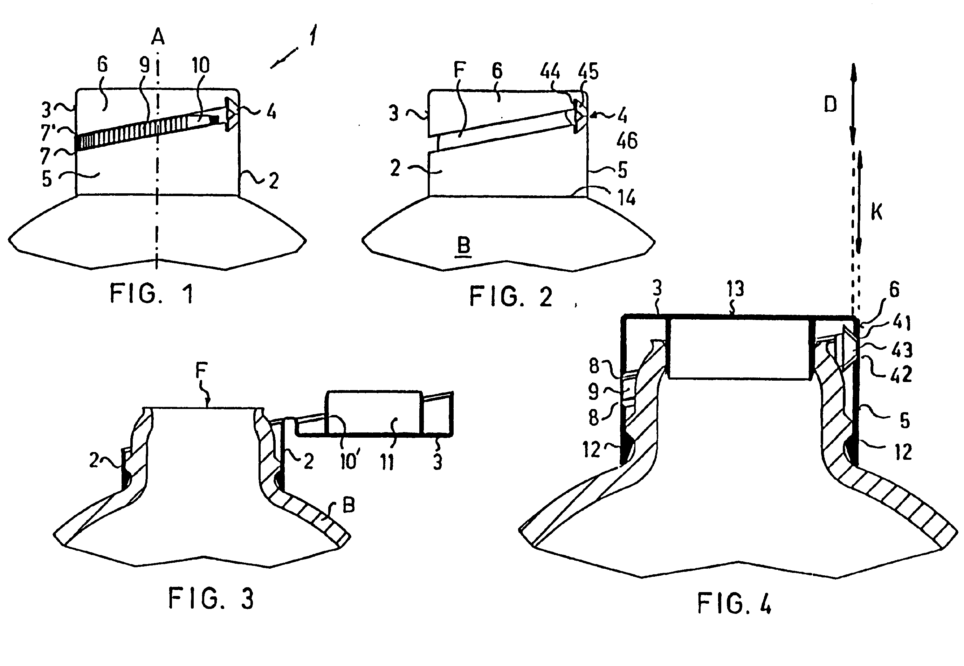

In der Zeichnung ist der geschlossen herstellbare Kunststoffverschluss gesamthaft mit 1 bezeichnet. Er weist einen Unterteil 2 auf und einen Deckel 3. Unterteil 2 und Deckel 3 sind rotationssymmetrisch in Bezug auf die Zentrumsachse A. Der Unterteil 2 besitzt eine Mantelwand 5 und der Deckel 3 eine Mantelwand 6. Unterteil 2 und Mantelwand 3 sind einstückig über ein Schnappscharnier 4 miteinander verbunden. Ferner sind Unterteil 2 und Deckel 3 über mindestens eine Solltrennnaht 7 miteinander verbunden. Hierbei verläuft die mindestens eine Solltrennnaht 7 immer von einer Seite des Schnappscharnieres 4 umlaufend um die Peripherie des Kunststoffverschlusses 1 zur anderen Seite des Schnappscharnieres 4. Die Solltrennnaht 7 kann durch eine durchgehende Trennlinie gebildet sein, die lediglich durch mehrere zerstörbare Brücken durchbrochen ist. Im hier dargestellten, bevorzugten Beispiel handelt es sich jedoch um durchgehende Dünnstellen, die eine sogenannte Reissnaht bilden. Diese Reissnähte 8 sind insbesondere in der Figur 4, in welcher der Verschluss in grösserem Massstab dargestellt ist, deutlich erkennbar. Auffällig ist hier, dass nicht eine einzige Solltrennnaht 7 vorhanden ist, sondern dass zwei parallel verlaufende Solltrennnähte 7 und 7' vorhanden sind, zwischen denen ein Garantieband 9 vorhanden ist. Dieses Garantieband 9 weist mindestens einseitig in der Nähe des Schnappscharnieres 4 eine Aufreisslasche 10 auf. Im Normalfall und der bevorzugten Lösung ist der Verschluss nicht nur rotationssymmetrisch bezüglich der Achse A, sondern stellen die Mantelwände 5,6 Abschnitte desselben Kreiszylinders dar. Die Mantelwände 5,6 stehen somit vollständig fluchtend vertikal übereinander. Dank dieser Formgestaltung kann der Verschluss auch auf Normflaschenhälsen verwendet werden. Der Behälter B benötigt folglich keinen besonders gestalteten Flaschenhals F. Der Deckel 3 kann somit mit einer ringförmigen Dichtwand 10' versehen sein, die einen Dichtzapfen 11 bildet, der direkt ohne Adapterstück dichtend in den Flaschenhals F zu liegen kommt. Hierdurch werden nicht nur Herstellungskosten gespart sondern auch Montagekosten. Der hier dargestellte Verschluss lässt sich problemlos und mit hoher Kadenz mit herkömmlichen Montagemaschinen auf die Behälter aufdrücken. Insbesondere durch die Verwendung von durchgehenden Reissnähten 8 besteht auch keine Gefahr, dass die zerbrechlichen Brücken im Bereich der Solltrennnähte während der Montage zerstört werden. Die Befestigung des Verschlusses 1 auf dem Behälterhals F erfolgt mit herkömmlichen Mitteln, die direkt an der Mantelwand 5 des Unterteiles 2 angeformt sein können. Im dargestellten Beispiel ist dies eine nach innen vorstehende umlaufende Haltewulst 12. Statt der Haltewulst 12 können selbstverständlich auch nur Haltewulstabschnitte vorgesehen sein. Insbesondere in den Figuren 1 und 4 ersieht man deutlich, dass die Mantelwände von Oberteil und Unterteil im hier dargestellten Beispiel auf der Aussenfläche vollständig glatt sind. Demgegenüber weisen die Innenflächen der Mantelwände von Oberteil und Unterteil Einformungen und Ausformungen auf. Unter Einformungen und Ausformungen werden hier Wanddickenänderungen verstanden, wobei als Einformungen Vertiefungen in der Mantelwandfläche bezeichnet werden, die hier jeweils betrachtet wird, während Ausformungen Erhebungen sein sollen gegenüber der Mantelwandfläche, die betrachtet wird. In dem hier dargestellten Beispiel sind alle Einformungen und Ausformungen an der Innenfläche der Mantelwände von Unterteil und Deckel angeordnet. Dies ist sicherlich die meistsinnvolle Gestaltungsform doch ist es nicht ausgeschlossen, sämtliche Einformungen und Ausformungen an den Aussenflächen von Unterteil und Deckel anzubringen. Für die Lösung der erfindungsgemässen Aufgabe ist zwingend erforderlich, dass das Schnappscharnier in Mantelwandbereichen des Verschlusses liegt, die parallel zur Schliess- und Öffnungsbewegungsrichtung der Spritzform verlaufen. Eine Spritzform besteht im einfachsten Fall aus zwei Werkzeughälften. Diese Werkzeuge werden meist auch Platten genannt. Während die eine Werkzeughälfte Kavitäten aufweist, welche die Aussenflächen der darin hergestellten Verschlüsse formen, weist die andere Werkzeughälfte sogenannte Dorne auf, die beim Zusammenfahren der beiden Werkzeughälften in die Kavitäten der anderen Werkzeughälfte einfahren. Der verbleibende Zwischenraum wird mit Kunststoff gefüllt und bildet den zu erzeugenden Kunststoffverschluss. Während man früher die Auffassung vertrat, dass an Mantelwänden, die parallel zur Schliess- und Öffnungsbewegung der Spritzform verlaufen, keine Formabweichungen von dieser Bewegungsrichtung zulässig sind, ohne dass entsprechende Schieber oder andere bewegliche Teile an der Spritzform vorgesehen sind, ist man von dieser Theorie heute abgewichen. Insbesondere Gewinde an Verschlüssen oder Haltewulste werden als zulässig angesehen. Wesentlich ist, dass erst die beiden Spritzgussformteile auseinandergefahren sind, so dass das Material mindestens einseitig ausweichen kann, um den entsprechenden Spritzgussgegenstand vollständig zu entformen. Auf dieser Erkenntnis beruhend wurde der erfindungsgemässe Kunststoffverschluss in seiner gesamten Konstruktion konzipiert. Insbesondere bei Schnappscharnierverschlüssen wurde dieses Herstellungskonzept zur Erzeugung des Schnappscharnieres selber bisher noch nie angewendet. Bei diesem Konzept ergeben sich besonders formschöne Verschlüsse, wenn die Mantelwände von Unterteil 2 und Deckel 3 mindestens im Bereich des Schnappscharnieres fluchtend übereinanderstehend angeordnet sind. Hierbei wird der Bereich als ein Zylindersektor verstanden, das heisst, dass die Bereiche vom Schnappscharnier bis zur Deckfläche 13 des Deckels 3 und vom Schnappscharnier 4 bis zur Unterkante 14 des Unterteiles 2 vollständig fluchtend übereinanderstehen. Die angrenzenden Wandbereiche könnten jedoch durchaus geneigt verlaufend gestaltet sein. Dies ist jedoch in den meisten Fällen nicht erwünscht. Entsprechend wird man bevorzugterweise die Mantelwände 5,6 vollständig fluchtend übereinander stehend anordnen.

Wie bereits erwähnt, sollten nur die Innenflächen oder nur die Aussenflächen Einformungen und/oder Ausformungen aufweisen. Diese Einformungen und/oder Ausformungen dürfen dabei die Wandstärke der Mantelwände nicht überschreiten. Selbstverständlich ist dies im Rahmen der üblichen Genauigkeiten und zulässigen Toleranzen zu verstehen. Je grösser der Gesamtdurchmesser des Verschlusses ist, um so grösser darf die relative Abweichung selbstverständlich sein. Dies ist für den Kunststofftechniker ein Erfahrungswert, der nicht weiter erläutert werden muss.

Bezüglich der Gestaltung des Garantiebandes 9 ist man relativ frei. Immer bilden jedoch das Garantieband 9 sowie die Lasche 10 praktisch Teilbereiche der übereinanderstehenden Mantelwände 5,6. Durch das Abreissen des Garantiebandes 9 kann der Verschluss erst geöffnet werden. Wie bereits erwähnt und in der Zeichnung dargestellt können die Solltrennnähte 7,7', welche das Garantieband 9 begrenzen, parallel zueinander verlaufen. Verlaufen beide Solltrennnähte parallel zueinander so können sie relativ zur Zentrumsachse beziehungsweise zur zentrischen Mittelachse A des Verschlusses senkrecht oder geneigt verlaufen. Selbstverständlich können die Solltrennnähte 7,7' auch in unterschiedlich zur zentrischen Mittelachse A verlaufenden Ebenen angeordnet sein, wobei im Spezialfall die eine Solltrennnaht senkrecht zur zentrischen Mittelachse und die zweite Solltrennnaht 7 geneigt zur zentrischen Mittelachse A verlaufen kann.

Das hier zur Anwendung gelangende Schnappscharnier entspricht im wesentlichen einem Schnappscharnier, wie es aus der EP-A-0'056'469 oder der US-A-3,135,456 bekannt ist. Dies sind Schnappscharniere, die im wesentlichen aus zwei Filmscharnieren gebildet sind. Während das eine Filmscharnier 41 die bewegliche Verbindung zwischen der Mantelwand 6 des Deckels 3 und einem Zwischenelement 43 darstellt, bildet das zweite Filmscharnier 42 die Trennlinie zwischen Mantelwand 5 des Unterteiles 2 und dem genannten Zwischenelement 43 des Schnappscharnieres 4. Das Schnappscharnier hat seitliche Begrenzungen 44, die durch einen Spalt gebildet sind. Die Filmscharniere 41,42 können zwischen den beiden seitlichen Begrenzungen 44 verschiedene Verlaufsrichtungen haben. Diesbezüglich kann auf die zuvor genannten Druckschriften verwiesen werden. Prinzipiell können jedoch die Filmscharniere 41,42 zwischen den beiden Begrenzungen 44 sich einander mittig annähern oder auseinander verlaufen. Ferner können die Filmscharniere einen gekrümmten oder geknickten Verlauf nehmen und sie können sich ferner so weit annähern, dass sie sich gegenseitig berühren, wodurch zwei seitliche zugkräfteübertragende Zwischenelemente 45 entstehen. Wie bereits erwähnt, werden die seitlichen Begrenzungen 44 durch eine Fuge von den Mantelwänden 5,6 getrennt. Diese Fuge 46 bildet somit die Trennung zwischen dem oder den Zwischenelementen beziehungsweise zwischen Elementen und den angrenzenden Mantelwänden 5,6. Praktisch als zusätzliches Garantieelement können aber auch die seitlichen Begrenzungen 44 mit den angrenzenden Mantelwänden verbunden sein, wobei diese Verbindungen als Solltrennnähte gestaltet sein müssen. Während der Erstöffnung des Verschlusses würden diese Solltrennnähte reissen.

Wie bereits erwähnt, lassen sich die erfindungsgemässen Kunststoffverschlüsse mittels Spritzgussformen herstellen, wobei eine Spritzgussform aus zwei Platten besteht, von denen die eine Platte die Kerne aufweist und die andere Platte die Kavitäten. Hierbei weist mindestens eine der beiden Platten an den zu der Ausfahrrichtung der Platte parallelen Flächen keine Einbuchtungen oder Ausbuchtungen auf. Entsprechend haben Kunststoffverschlüsse, die mittels dieser Spritzgussformen hergestellt sind, an den entsprechenden Mantelwandflächen keine Einformungen oder Ausformungen. Für die Herstellung der Verschlüsse, wie sie in den Figuren 1 bis 4 dargestellt sind, weist die Platte mit den Dornen mit den zur Ausfahrrichtung parallelen Flächen Ausbuchtungen und/oder Einbuchtungen auf, welche die entsprechenden Ausformungen und/oder Einformungen bilden, während die Kavitäten auf der anderen Platte an den parallel zur Ausfahrtrichtung liegenden Flächen keinerlei Einbuchtungen oder Ausbuchtungen aufweisen. Selbstverständlich ist die entsprechende Umkehrung, wie sie in Anspruch 17 beschrieben ist, ebenfalls möglich.

Arbeitet man mit den soeben beschriebenen Spritzgussformen, um entsprechende Verschlüsse zu gestalten so ist zwingend, dass zuerst jene Platte ausgefahren wird, welche an den parallel zur Ausfahrrichtung verlaufenden Flächen keine Einbuchtungen oder Ausbuchtungen aufweist. Sind nun die Verschlüsse einseitig freigestellt, so können sie von der anderen Platte, an der die parallel zur Ein- und Ausfahrrichtung der Formen entsprechenden Einbuchtungen beziehungsweise Ausbuchtungen vorhanden sind, unter entsprechender elastischer Verformung abgestossen werden. Normalerweise wird man dabei wie bereits erwähnt die Kavitäten frei von Einbuchtungen und Ausbuchtungen gestalten. Entsprechend wird erst die Kavitäten aufweisende Platte zurückgezogen und danach die Kerne aus den Verschlüssen gezogen. Selbstverständlich ist auch hier wiederum die Umkehrung möglich. Haben die Verschlüsse glatte Innenflächen der Mantelwände, so kann man zuerst die Kerne aus den Verschlüssen ziehen und danach die Verschlüsse aus den Kavitäten ausstossen.

### Liste der Bezugszahlen

- A: Zentrumsachse
- B: Behälter
- F: Flaschenhals

- 1: Kunststoffverschluss
- 2: Unterteil
- 3: Deckel
- 4: Schnappscharnier
- 5: Mantelwand des Unterteiles
- 6: Mantelwand des Deckels
- 7: Solltrennnaht
- 8: Reissnaht
- 9: Garantieband
- 10: Ringwand
- 11: Dichtzapfen
- 12: Haltewulst
- 13: Deckfläche
- 14: Unterkante des Unterteiles 2
- 41: Filmscharnier
- 42: Filmscharnier
- 43: Zwischenelement
- 44: seitliche Begrenzung
- 45: Zwischenelement
- 46: Fuge

## Patentansprüche

1. Kunststoffverschluss umfassend einen Unterteil und einen Deckel und ein Schnappscharnier, über das die beiden Verschlussteile einstückig miteinander verbunden sind, wobei Unterteil und Deckel geschlossen und über mindestens eine Solltrennnaht miteinander zusätzlich verbunden herstellbar sind, **dadurch gekennzeichnet, dass** sämtliche Elemente des Schnappscharnieres in den Mantelwandbereichen des Verschlusses liegen, die parallel zur Schliess- und Öffnungsbewegungsrichtung der Spritzform verlaufen.

2. Kunststoffverschluss nach Anspruch 1, **dadurch gekennzeichnet, dass** die Mantelwände von Unterteil und Deckel mindestens im Bereich des Schnappscharnieres fluchtend übereinander stehend angeordnet sind.

3. Kunststoffverschluss nach Anspruch 1, **dadurch gekennzeichnet, dass** die Mantelwände von Unterteil und Deckel vollständig fluchtend übereinander stehen.

4. Kunststoffverschluss nach Anspruch 3, **dadurch gekennzeichnet, dass** die Mantelwände von Unterteil und Deckel auf der Aussenfläche frei von Einformungen oder Ausformungen sind und die Innenflächen Einformungen und/oder Ausformungen aufweisen, die die Wandstärke der Mantelwände nicht überschreiten.

5. Kunststoffverschluss nach Anspruch 3, **dadurch gekennzeichnet, dass** die Mantelwände von Unterteil und Deckel auf der Innenfläche frei von Einformungen oder Ausformungen sind und die Aussenflächen Einformungen und/oder Ausformungen aufweisen, die die Wandstärke der Mantelwände nicht überschreiten.

6. Kunststoffverschluss nach Anspruch 1, **dadurch gekennzeichnet, dass** Unterteil und Deckel über zwei Solltrennnähte miteinander verbunden sind, die ein Garantieband begrenzen, wobei die beiden Solltrennnähte von einer seitlichen Begrenzung des Schnappscharnieres ausgehend rund um den Verschluss bis mindestens annähernd zur anderen seitlichen Begrenzung des Schnappscharnieres verlaufen.

7. Kunststoffverschluss nach Anspruch 6, **dadurch gekennzeichnet, dass** die beiden Solltrennnähte parallel zueinander verlaufen.

8. Kunststoffverschluss nach Anspruch 6, **dadurch gekennzeichnet, dass** die beiden Solltrennnähte in zwei Ebenen verlaufen, die senkrecht zur zentrischen Mittelachse des Verschlusses verlaufen.

9. Kunststoffverschluss nach Anspruch 6, **dadurch gekennzeichnet, dass** die beiden Solltrennnähte in Ebenen verlaufen, die zur zentrischen Mittelachse des Verschlusses geneigt verlaufen.

10. Kunststoffverschluss nach Anspruch 6, **dadurch gekennzeichnet, dass** die beiden Solltrennnähte in Ebenen verlaufen, die zur zentrischen Mittenachse des Verschlusses unterschiedlich geneigt verlaufen.

11. Kunststoffverschluss nach Anspruch 1, **dadurch gekennzeichnet, dass** das Schnappscharnier aus zwei Filmscharnieren gebildet ist, die von einer seitlichen Begrenzung zur anderen Begrenzung des Schnappscharnieres einen solchen Verlauf nehmen, dass sie sich mittig annähern oder auseinander verlaufen.

12. Kunststoffverschluss nach Anspruch 11, **dadurch gekennzeichnet, dass** die beiden Filmscharniere sich mittig mindestens annähernd berühren und einen gekrümmten und/oder geknickten Verlauf nehmen, wobei sie zwei seitliche zugkräfteübertragende Zwischenelemente einschliessen.

13. Kunststoffverschluss nach Anspruch 11, **dadurch gekennzeichnet, dass** die seitlichen Begrenzungen der Zwischenelemente durch eine Fuge von den Mantelwänden getrennt sind.

14. Kunststoffverschluss nach Anspruch 11, **dadurch gekennzeichnet, dass** die seitlichen Begrenzungen der Zwischenelemente durch Solltrennnähte mit den angrenzenden Mantelwänden verbunden sind, wobei bei der Erstöffnung diese Solltrennnähte reissen.

15. Spritzgussform zur Herstellung von Kunststoffverschlüssen nach einem der Ansprüche 1-14, bestehend aus zwei Platten, von denen die eine Platte die Kerne aufweist und die andere Platte die Kavitäten, **dadurch gekennzeichnet, dass** mindestens eine der Platten an den zu der Ausfahrrichtung der Platte parallelen Flächen frei von Einbuchtungen oder Ausbuchtungen ist.

16. Spritzgussform nach Anspruch 15, **dadurch gekennzeichnet, dass** die Dorne an der einen Platte in den zur Ausfahrrichtung parallelen Flächen Ausbuchtungen und/oder Einbuchtungen aufweisen, während die Kavitäten aufweisende Platte an den parallel zur Ausfahrrichtung liegenden Flächen frei von Einbuchtungen oder Ausbuchtungen ist.

17. Spritzgussform nach Anspruch 15, **dadurch gekennzeichnet, dass** die Kavitäten in den zur Ausfahrrichtung parallelen Flächen Einbuchtungen oder Ausbuchtungen aufweisen, während die zur Ausfahrrichtung parallelen Flächen der Dorne frei von Ausbuchtungen oder Einbuchtungen sind.

18. Verfahren zur Herstellung der Verschlüsse nach einem der Ansprüche 1-14 unter Verwendung der Spritzgussform nach einem der Ansprüche 15-17, **dadurch gekennzeichnet, dass** zuerst jene Platte ausgefahren wird, welche Dorne beziehungsweise Kavitäten mit zur Ausfahrrichtung parallelen Flächen frei von Einbuchtungen oder Ausbuchtungen aufweist, worauf die nun einseitig freigestellten Verschlüsse von der anderen Platte abgestossen werden.

19. Verfahren nach Anspruch 18 unter Verwendung der Spritzgussform nach Anspruch 16, **dadurch gekennzeichnet, dass** erst die Kavitäten aufweisende Platte zurückgezogen und danach die Kerne aus den Verschlüssen gezogen werden.

20. Verfahren nach Anspruch 18 unter Verwendung der Spritzgussform nach Anspruch 17, **dadurch gekennzeichnet, dass** zuerst die Kerne aus den Verschlüssen gezogen werden und danach die Verschlüsse ausgestossen werden.

## Claims

1. A plastic closure comprising a lower part and a cap and a snap hinge via which the two closure parts are connected to one another as one piece, wherein the lower part and the cap may be manufactured in the closed state and additionally connected to one another via at least one separation seam, **characterised in that** all elements of the snap hinge lie in the lateral wall (skirt) regions of the closure which run parallel to the closing and opening movement direction of the injection mould.

2. A plastic closure according to claim 1, **characterised in that** the lateral walls of the lower part and the cap are arranged lying on top of one another in a flush manner at least in the region of the snap hinge.

3. A plastic closure according to claim 1, **characterised in that** the lateral walls of the lower part and cap lie on top of one another in a completely flush manner.

4. A plastic closure according to claim 3, **characterised in that** the lateral walls of the lower part and the cap on the outer surface are free of inward formations or outward formations, and the inner surfaces comprise inward formations and/or outward formations which do not exceed the wall thickness of the lateral walls.

5. A plastic closure according to claim 3, **characterised in that** the lateral walls of the lower part and the cap on the inner surface are free of inward formations or outward formations, and the outer surfaces have inward formations and/or outward formations which do not exceed the wall thickness of the lateral walls.

6. A plastic closure according to claim 1, **characterised in that** the lower part and the cap are connected to one another via two separation seams which delimit a guarantee strip, wherein the two separation seams proceeding from a lateral limitation of the snap hinge run around the closure up to at least approximately the other lateral limitation of the snap hinge.

7. A plastic closure according to claim 6, **characterised in that** the two separation seams run parallel to one another.

8. A plastic closure according to claim 6, **characterised in that** the two separation seams run in two planes which run perpendicular to the centric middle axis of the closure.

9. A plastic closure according to claim 6, **characterised in that** the two separation seams run in planes which run inclined to the centric middle axis of the closure.

10. A plastic closure according to claim 6, **characterised in that** the two separation seams run in planes which run differently inclined to the centric middle axis of the closure.

11. A plastic closure according to claim 1, **characterised in that** the snap hinge is formed of two film hinges which from one lateral limitation to the other limitation of the snap hinge assume such a course that they centrally approach one another or run apart (diverge).

12. A plastic closure according to claim 11, **characterised in that** the two film hinges at the middle contact one another at least approximately and assume a curved course or one running with a sharp bend, wherein they laterally enclose two lateral intermediate elements transmitting tensile forces.

13. A plastic closure according to claim 11, **characterised in that** the lateral limitations of the intermediate elements are separated from the lateral walls by a gap.

14. A plastic closure according to claim 11, **characterised in that** the lateral limitations of the intermediate elements are connected to the adjacent lateral walls by separation seams, wherein these separation seams tear on opening for the first time.

15. An injection mould for manufacturing plastic closures according to one of the claims 1-14, consisting of two plates of which the one plate comprises the cores, and the other plate the cavities, **characterised in that** at least one of the plates on the surfaces parallel to the extension direction of the plate is free of recesses or protuberances.

16. An injection mould according to claim 15, **characterised in that** the mandrels on the one plate in the surfaces parallel to the extension direction comprise protuberances and/or recesses, whilst the plate comprising the cavities, on the surfaces lying parallel to the extension direction is free of recesses or protuberances.

17. An injection mould according to claim 15, **characterised in that** the cavities in the surfaces parallel to the extension direction comprise recesses or protuberances, whilst the surfaces of the mandrels parallel to the extension direction are free of protuberances or recesses.

18. A method for manufacturing the closure according to one of the claims 1-14 whilst using the injection mould according to one of the claims 15-17, **characterised in that** firstly that plate which comprises mandrels or cavities with surfaces parallel to the extension direction which are free of recesses or protuberances is extended, whereupon then the closures which are [set] free at one side are ejected from the other plate.

19. A method according to claim 18 using the injection mould according to claim 16, **characterised in that** firstly the plate comprising the cavities is retracted and thereafter the cores are pulled from the closures.

20. A method according to claim 18 using the injection mould according to claim 17, **characterised in that** firstly the cores are pulled from the closures and thereafter the closures are ejected.

## Revendications

1. Fermeture en matière plastique comportant une pièce inférieure, un couvercle et une charnière à déclic permettant de relier d'une seule pièce les deux pièces de fermeture, la pièce inférieure et le couvercle pouvant être fabriqués en étant fermés et reliés en plus par au moins un cordon de séparation, **caractérisée en ce que** tous les éléments de la charnière à déclic se trouvent dans des zones de paroi d'enveloppe de la fermeture qui s'étendent parallèlement à la direction du mouvement de fermeture et d'ouverture du moule à injection.

2. Fermeture en matière plastique selon la revendication 1, **caractérisée en ce que** les parois d'enveloppe sont disposées de façon à faire saillie de la pièce inférieure et du couvercle au moins dans la région de la charnière à déclic en étant alignées.

3. Fermeture en matière plastique selon la revendication 1, **caractérisée en ce que** les parois d'enveloppe font saillie de la pièce inférieure et du couvercle en étant totalement alignées.

4. Fermeture en matière plastique selon la revendication 3, **caractérisée** dans ce que les parois d'enveloppe de la pièce inférieure et du couvercle sont dépourvues, sur la face intérieure, de conformations en creux ou de conformations en saillie, et les faces extérieures comportent des conformations en saillie et/ou des conformations en creux qui ne dépassent pas l'épaisseur des parois d'enveloppe.

5. Fermeture en matière plastique selon la revendication 3, **caractérisée en ce que** les parois d'enveloppe de la pièce inférieure et du couvercle sont totalement dépourvues, sur la face extérieure, de conformations en creux ou de conformations en saillie, et les faces intérieures comportent des conformations en saillie et/ou des conformations en creux qui ne dépassent pas l'épaisseur des parois d'enveloppe.

6. Fermeture en matière plastique selon la revendication 1, **caractérisée en ce que** la pièce inférieure et le couvercle sont reliés par deux cordons de séparation qui délimitent une bande de garantie, les deux cordons de séparation s'étendant autour de la fermeture d'une limite latérale de la charnière à encliquetage jusqu'à l'autre limite latérale de la charnière à déclic.

7. Fermeture en matière plastique selon la revendication 6, **caractérisée en ce que** les deux cordons de séparation s'étendent parallèlement l'un à l'autre.

8. Fermeture en matière plastique selon la revendication 6, **caractérisée en ce que** les deux cordons de séparation s'étendent dans deux plans qui s'étendent perpendiculairement à l'axe médian central de la fermeture.

9. Fermeture en matière plastique selon la revendication 6, **caractérisée en ce que** les deux cordons de séparation s'étendent des plans qui s'étendent obliquement à l'axe médian central de la fermeture.

10. Fermeture en matière plastique selon la revendication 6, **caractérisée en ce que** les deux cordons de séparation s'étendent dans des plans qui s'étendent avec des inclinaisons différentes par rapport à l'axe médian central de la fermeture.

11. Fermeture en matière plastique selon la revendication 1, **caractérisée en ce que** la charnière à déclic est formée de deux charnières à film dont la disposition, d'une limite latérale à l'autre limite latérale de la charnière à déclic, est telle qu'elles s'approchent au milieu ou s'écartent l'une de l'autre.

12. Fermeture en matière plastique selon la revendication 11, **caractérisée en ce que** les deux charnières à film se touchent au milieu au moins en se rapprochant et présentent une forme incurvée ou courbée, les deux charnières enfermant deux éléments intermédiaires latéraux transmettant des forces de traction.

13. Fermeture en matière plastique selon la revendication 11, **caractérisée en ce que** les limites latérales des éléments intermédiaires sont séparées des parois d'enveloppe par une jonction.

14. Fermeture en matière plastique selon la revendication 11, **caractérisée en ce que** les limites latérales des éléments intermédiaires sont reliées aux parois d'enveloppe adjacentes par des cordons de séparation, ces cordons de séparation se déchirant lors de la première ouverture.

15. Moule de moulage par injection pour la fabrication de fermetures en matière plastique selon l'une des revendications 1 à 14, constitué de deux plaques dont une plaque comporte un noyau et l'autre plaque comporte des cavités, **caractérisé en ce qu'**au moins l'une des plaques est dépourvue, au niveau des faces parallèles à la direction de sortie de la plaque, de creux ou de bosses.

16. Moule de moulage par injection selon la revendication 15, **caractérisé en ce que** les mandrins présentent des creux et/ou des bosses au niveau des faces, parallèles à la direction de sortie, de l'une des plaques, tandis que la plaque comportant des cavités est dépourvue de bosses ou de creux au niveau des faces parallèles à la direction de sortie.

17. Moule de moulage par injection selon la revendication 15, **caractérisé en ce que** les cavités ménagées dans les faces parallèles à la direction de sortie comportent des bosses ou des creux tandis que les faces, parallèles à la direction de sortie, de mandrins sont dépourvues de bosses ou de creux.

18. Procédé de fabrication de la fermeture selon l'une des revendications 1 à 14 avec le moule de moulage par injection selon l'une des revendications 15 à 17, **caractérisé en ce que** on sort tout d'abord chaque plaque qui comporte des mandrins respectivement des cavités dont les faces parallèles à la direction de sortie sont dépourvues de bosses ou de creux, puis on repousse la fermeture, alors libérée sur un côté, de l'autre plaque.

19. Procédé selon la revendication 18 avec le moule de moulage par injection selon la revendication 16, **caractérisé en ce que** l'on retire tout d'abord la plaque comportant des cavités puis on retire les noyaux des fermetures.

20. Procédé selon la revendication 18 avec le moule de moulage par injection selon la revendication 17, **caractérisé en ce que** l'on retire tout d'abord les noyaux des fermetures puis on repousse les fermetures.
